# EUROPEAN PATENT APPLICATION

(11) **EP 4 822 886 A1**
(43) Date of publication of application: **14.10.2026**
(21) Application number: 25227678.7
(22) Date of filing: 30.12.2025
(51) Int. Cl.: H01M 50/578, H01M 50/184, H01M 50/186, H01M 50/107, H01M 50/342, H01M 50/593

(54) **SECONDARY BATTERY**

(30) Priority: 09.04.2025 KR 20250046194
(71) Applicant: SAMSUNG SDI CO., LTD., Yongin-si, Gyeonggi-do 17084 (KR)
(72) Inventor: PARK, Jong Jun, 17084 Yongin-si, Gyeonggi-do (KR); KIM, Dae Kyu, 17084 Yongin-si, Gyeonggi-do (KR); SEO, Kwang Soo, 17084 Yongin-si, Gyeonggi-do (KR); CHO, Sung Joon, 17084 Yongin-si, Gyeonggi-do (KR)
(74) Representative: Bardehle Pagenberg Partnerschaft mbB Patentanwälte Rechtsanwälte

(57) **Abstract**

A secondary battery includes a cylindrical can having an open end and a closed end, an electrode assembly accommodated in the can, and a cap assembly. The cap assembly includes a upper cap closing the open end of the can, a lower cap spaced apart from the upper cap and facing the electrode assembly, a vent plate disposed between the upper cap and the lower cap, with a notch being formed in the vent plate, and an insulating gasket inserted between the vent plate and the can. An diameter of the lower cap is less than the diameter of the notch.

## Description

### BACKGROUND

### 1. Field

Aspects of some embodiments of the present disclosure relate to a secondary battery.

### 2. Description of the Related Art

Unlike primary batteries that are not designed to be (re)charged, secondary (or rechargeable) batteries are batteries that are designed to be discharged and recharged. Low-capacity secondary batteries are used in portable small electronic devices, such as smart phones, feature phones, notebook(laptop) computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The information disclosed in this section is provided only for enhancement of understanding of the background of the disclosure and therefore it may contain information that does not constitute related (or the prior) art.

### SUMMARY

The above objects are at least partially achieved by the subject matter of the independent claims. Preferred embodiments are the subject of the dependent claims, and the skilled person will find clues to other suitable aspects of the present invention in the overall disclosure of the present application.
An aspect of the present disclosure is related a secondary battery capable of inducing discharge of an electrode assembly in response to increase in internal pressure.

These and other aspects and features of the present disclosure will be described in or will be apparent from the following description of embodiments of the present disclosure.

A secondary battery according to an embodiment of the present disclosure includes a cylindrical can having an open end and a closed end, an electrode assembly accommodated in the can, and a cap assembly including an upper cap closing the open end of the can, a lower cap spaced apart from the upper cap and facing the electrode assembly, a vent plate disposed between the upper cap and the lower cap, with a notch being formed in the vent plate, and an insulating gasket inserted between the vent plate and the can, wherein an outer diameter of the lower cap is less than the diameter of the notch.

The secondary battery may further include an insulator between the vent plate and the lower cap.

An outer diameter of the insulator is less than the diameter of the notch.

The vent plate may surround an edge of the upper cap.

The upper cap may be formed in a circular disc shape and may include a first region surrounded by the vent plate, a second region protruding in a direction away from the electrode assembly, and a third region connecting the first region to the second region, with a plurality of discharge holes being formed in the third region.

The vent plate may be formed in a circular disc shape and may include a first portion disposed below the second region of the upper cap, an inclined surface extending upward from the first region, a second portion extending outward from the inclined surface and in contact with a lower surface of the first region of the upper cap, a third portion extending from the second portion and in contact with a side surface of the first region of the upper cap, and a fourth portion extending from the third portion and in contact with an upper surface of the first region of the upper cap.

The notch may be formed in the first portion of the vent plate.

The vent plate may further include a contact portion protruding from a lower surface of the first portion toward the lower cap.

The notch may be spaced from the contact portion.

The lower cap may be formed in a circular disc shape and may include a first support portion disposed below the second region of the upper cap and the first portion of the vent plate and a connecting portion extending inward from the first support portion and electrically connected to the contact portion of the vent plate.

The secondary battery may further include a first electrode tab electrically connected to a lower surface of the support portion and a first electrode plate of the electrode assembly and a second electrode tab electrically connected to a second electrode plate of the electrode assembly and the closed end of the can.

A secondary battery according to another embodiment of the present disclosure includes a cylindrical can having an open end and a closed end, an electrode assembly accommodated in the can, and a cap assembly including a vent plate disposed at the open end of the can, with a notch formed in the vent plate, a lower cap spaced apart from the vent plate and facing the electrode assembly, and an insulating gasket inserted between the vent plate and the can, wherein an outer diameter of the lower cap is less than the diameter of the notch.

The secondary battery may further include an insulator between the vent plate and the lower cap.

An outer diameter of the insulator is less than the diameter of the notch.

The vent plate may be a circular disc shape and may have a folded edge.

The insulating gasket may surround the folded edge of the vent plate.

The vent plate may include a contact portion protruding from a lower surface and facing the lower cap.

The notch may be spaced from the contact portion.

The lower cap may be a circular disc shape and may include a support portion disposed below the vent plate and a connecting portion extending inward from the support portion and electrically connected to the contact portion of the vent plate.

The secondary battery may further include a first electrode tab electrically connected to a lower surface of the support portion and a first electrode plate of the electrode assembly and a second electrode tab electrically connected to a second electrode plate of the electrode assembly and the closed end of the can.

### BRIEF DESCRIPTION OF THE DRAWINGS

The following drawings illustrate embodiments of the present disclosure, and further describe aspects and features of the present disclosure together with the detailed description of the present disclosure. The present disclosure should not be construed as being limited to the drawings.
FIG. 1 is a perspective view showing a cylindrical secondary battery;
FIG. 2 is a cross-sectional view of the cylindrical secondary battery shown in FIG. 1;
FIG. 3 is an enlarged cross-sectional view of the cap assembly shown in FIG. 2;
FIG. 4 is a plan view of a secondary battery according to an embodiment of the present disclosure;
FIG. 5 is a cross-sectional view of the secondary battery taken along line A-A in FIG. 4;
FIG. 6 is an enlarged cross-sectional view of the cap assembly shown in FIG. 5;
FIG. 7 is a plan view of a secondary battery according to another embodiment of the present disclosure;
FIG. 8 is a cross-sectional view of the secondary battery taken along line C-C in FIG. 7;
FIG. 9 is an enlarged cross-sectional view of the cap assembly shown in FIG. 8;
FIGS. 10 and 11 are perspective views showing a battery pack including an exemplary secondary battery according to the present disclosure;
FIGS. 12 and 13 are perspective and side views of a vehicle including an exemplary battery pack according to the present disclosure.

### DETAILED DESCRIPTION OF EXEMPLARY EMBODIMENTS

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Additionally, in order to facilitate understanding of the disclosure, the attached drawings are not drawn to scale and the dimensions of some components may be exaggerated. Additionally, the same reference numbers may be assigned to the same components in different embodiments.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terms used in this specification are for describing embodiments of the present disclosure and are not intended to limit the disclosure.

The structure of a cylindrical secondary battery will now be described.

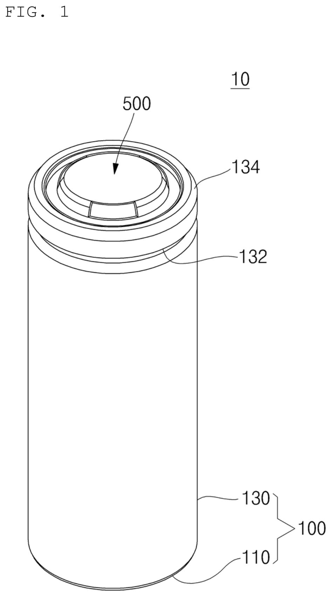

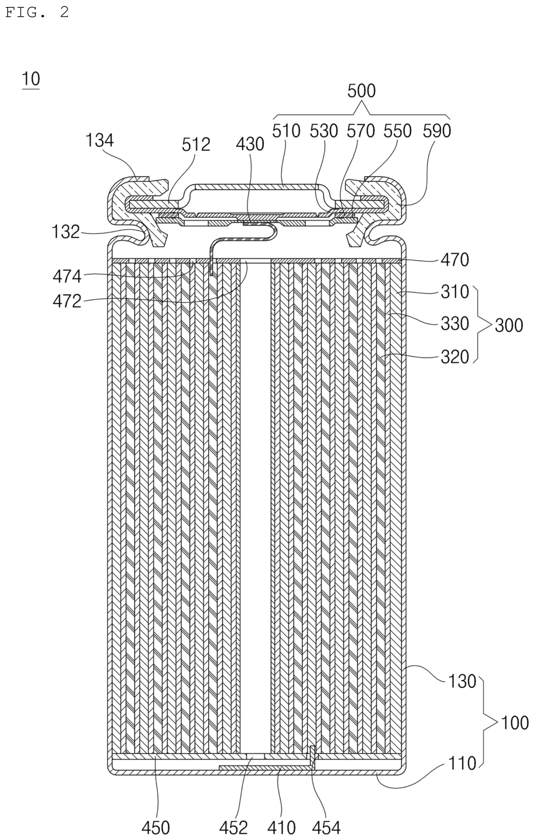

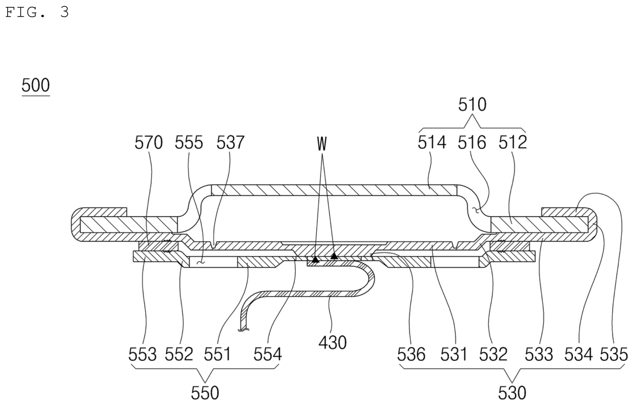

FIG. 1 is a perspective view showing a cylindrical secondary battery. FIG. 2 is a cross-sectional view of the cylindrical secondary battery shown in FIG. 1. FIG. 3 is an enlarged cross-sectional view of the cap assembly shown in FIG. 2.

Referring to FIGS. 1 to 3, the secondary battery 10 is a cylindrical battery. The secondary battery 10 includes a can 100, an electrode assembly 300, and a cap assembly 500. The electrode assembly 300 is electrically connected to the can 100 and the cap assembly 500 via a first electrode tab 410 and a second electrode tab 430. A first insulating plate 450 is disposed between the electrode assembly 300 and the can 100. A second insulating plate 470 is disposed between the electrode assembly 300 and the cap assembly 500.

The can 100 includes a disc-shaped bottom portion 110 and a cylindrical side portion 130 extending upward from the bottom portion 110. A beading portion 132 and a crimping portion 134 are provided on the upper end of the side portion 130. The cap assembly 500 is disposed between the beading portion 132 and the crimping portion 134. The electrode assembly 300 is accommodated in the can 100 together with an electrolyte.

The electrode assembly 300 includes a first electrode plate 310, which is a negative electrode plate, a second electrode plate 320, which is a positive electrode plate, and a separator 330. The electrode assembly 300 is configured such that the first electrode plate 310, the second electrode plate 320, and the separator 330 are wound in a cylindrical shape with the separator 330 interposed between the first electrode plate 310 and the second electrode plate 320.

The first insulating plate 450 is a disc shaped and is made of an insulating material. The first insulating plate 450 prevents the first electrode plate 310, which is a negative electrode plate, from being electrically connected to the bottom portion 110 of the can 100. The first electrode tab 410 is welded to the bottom portion 110 and positioned in an opening in the first insulating plate 450.

The second insulating plate 470 is disc shaped and is made of an insulating material. The second insulating plate 470 prevents the second electrode plate 320, which is a positive electrode plate, from being electrically connected to the cap assembly 500. The second electrode tab 430 described above is welded to a lower 550 and extends through the second insulating plate 470.

The cap assembly 500 includes an upper 510, a vent plate 530, a lower cap 550, an insulator 570, and an insulating gasket 590. The cap assembly 500 is inserted between the beading portion 132 and the crimping portion 134 of the can 100 via the insulating gasket 590.

The upper cap 510 is exposed to the outside of the can 100. The upper cap 510 has a shape in which a central region protrudes convexly from a disc-shaped metal plate. Herein, as shown in FIG. 3, the edge region of the upper cap 510 will be referred to as a first region 512, the protruding region will be referred to as a second region 514, and the inclined region thereof between the first region 512 and the second region 514 will be referred to as a third region. A plurality of discharge holes 516 forming gas discharge passages is provided in the third region.

The vent plate 530 has a substantially circular disc shape and is formed such that the edge of the vent plate surrounds the first region 512 of the upper cap 510. The vent plate 530 includes a first portion 531, an inclined surface 532, a second portion 533, a third portion 534, a fourth portion 535, and a contact portion 536. A notch 537 is provided in the first portion 531. The second portion 533 is in contact with the lower surface of the first region 512 of the upper cap 510. The third portion 534 is in contact with the side surface of the first region 512. The fourth portion 535 is in contact with a portion of the upper surface of the first region 512 of the upper cap 510. The contact portion 536 protrudes from the center of the lower surface of the first portion 531 toward the lower cap 550 and is welded to the lower cap 550. The welding area is indicated by "W" in the drawings.

The notch 537 is configured to rupture in response to increase in the internal pressure of the secondary battery 10, thereby opening the vent plate 530. If the notch 537 is ruptured, the first portion 531 located on the inner side of the diameter of the notch 537 breaks at the notch 537 and moves toward the upper cap 510. As a result, the contact portion 536 is separated from the lower cap 550, thereby allowing gas from the electrode assembly 300 to be discharged.

The lower cap 550 has a substantially circular disc shape and is disposed below the vent plate 530 in the figuration shown in FIG. 3. The lower cap 550 has a smaller diameter than the upper cap 510 or the vent plate 530 but has a larger diameter than the notch 537. The lower cap 550 includes a first support portion 551, an inclined portion 552, a second support portion 553, and a connecting portion 554.

The first support portion 551 is disposed below the first portion 531 of the vent plate 530. The inclined portion 552 extends upward from the outer diameter portion of the first support portion 551. The second support portion 553 is disposed below and spaced apart from the second portion 533 of the vent plate 530. The connecting portion 554 extends from the inner diameter portion of the first support portion 551 toward the center of the lower cap 550. The connecting portion 554 in thinner than the other portions of the lower cap 550. The connecting portion 554 is in contact with and welded to the contact portion 53. The connecting portion 554 is also in contact with and welded to the second electrode tab 430. The welding area is indicated by "W" in FIG. 3. If the internal pressure of the battery 10 increases due to generation of internal gas, the connecting portion 554 of the lower cap 550 and the contact portion 536 of the vent plate 530 become convex toward the upper cap 510. If the welded areas are separated from each other due to deformation of the connecting portion 554 and the contact portion 536, the current path is interrupted. Subsequently, as the internal gas continues to accumulate, the notch 537 described above is ruptured, and the gas is released.

The insulator 570 is formed of an insulating material to maintain separation and electrical insulation between the vent plate 530 and the lower cap 550. The insulator 570 is disposed between the second support portion 553 of the lower cap 550 and the second portion 533 of the vent plate 530.

The insulating gasket 590 surrounds an outer side of the vent plate 530. The upper cap 510 and the vent plate 530 are coupled to the can 100 via the insulating gasket 590 so as to be electrically insulated from the can 100.

In the secondary battery 10 configuration as described above, if the notch 537 is ruptured due to increase in internal pressure, the first portion 531 located on the inner side of the diameter of the notch 537 is completely separated from the rest of the lower cap 530 and moves toward the upper cap 510. In another example, the connecting portion 554 is severed from the first support portion 551 of the lower cap 530 and moves toward the upper cap 510 together with the ruptured region of the vent plate 530. Because the diameter of the lower cap 530 is greater than that of the notch 537, only a portion of the lower cap 530 is broken off at the notch 537, while the remaining portion of the lower cap 530 remains intact. Thus, despite an increase in internal pressure, the opening created due to rupture of the lower cap 530 is small, and the lower cap 530 still blocks the opening of the can 100 such that the electrode assembly 300 cannot be discharged from the can 100.

If a fire occurs in one secondary battery (cell) in an environment in which a plurality of secondary batteries (cells) is used, it is necessary to prevent the fire from spreading to adjacent cells and causing thermal runaway. However, if the electrode assembly is not discharged toward the cap assembly, the beading portion or the side portion of the can may be damaged. In such a case, the fire may spread to adjacent cells. Thus, when the internal pressure of a cell increases due to a fire or the like, discharging the electrode assembly to outside of the cell in conjunction with rupture of the notch is advantageous for preventing the spread of the fire. To achieve this result, the structure of the cap assembly needs to be improved.

Hereinafter, a secondary battery according to embodiments of the present disclosure capable of solving the above-described problems will be described in detail with reference to the accompanying drawings.

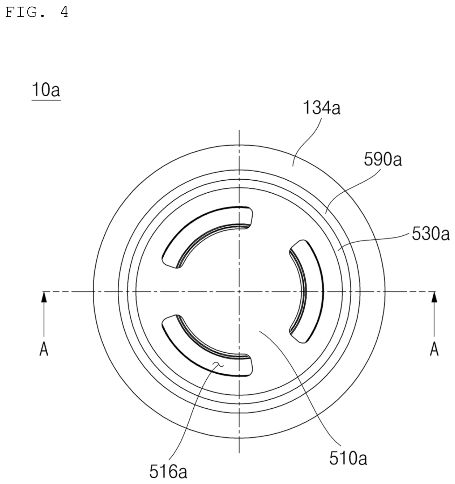

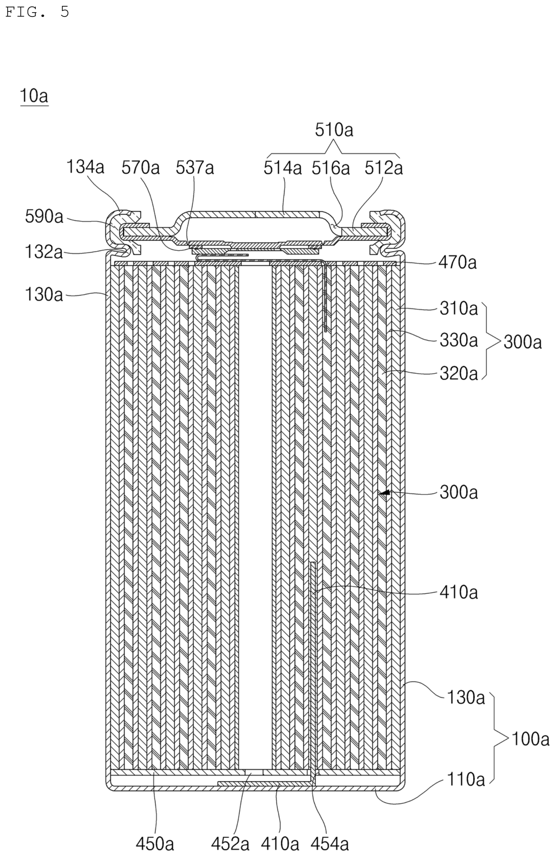

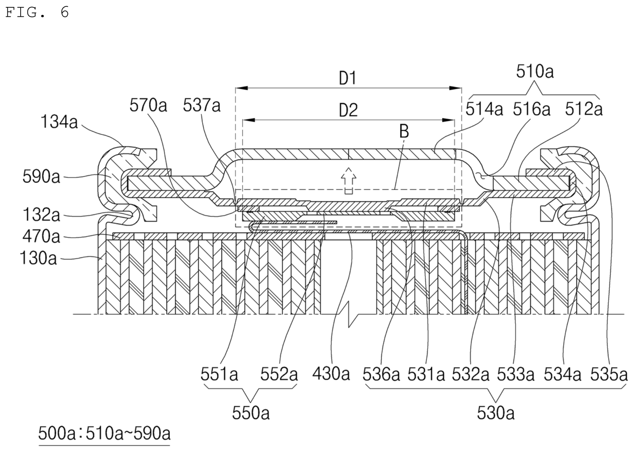

FIG. 4 is a plan view of a secondary battery according to an embodiment of the present disclosure. FIG. 5 is a cross-sectional view of the secondary battery taken along line A-A in FIG. 4. FIG. 6 is an enlarged cross-sectional view of the cap assembly shown in FIG. 5.

Referring to FIGS. 4 to 6, a secondary battery 10a according to an embodiment of the present disclosure may be a cylindrical battery. The secondary battery 10a may include a can 100a, an electrode assembly 300a, and a cap assembly 500a. The electrode assembly 300a may be electrically connected to the can 100a and the cap assembly 500a via a first electrode tab 410a and a second electrode tab 430a, respectively. A first insulating plate 450a may be disposed between the electrode assembly 300a and the can 100a, and a second insulating plate 470a may be disposed between the electrode assembly 300a and the cap assembly 500a.

The can 100a may define the external shape of the secondary battery 10a and be a cylindrical shape with one end open. The can 100a may include, or be referred to as, a case, a housing, or an exterior member. The can 100a may be formed of metal, such as steel, nickel-plated steel, a steel alloy, aluminum, an aluminum alloy, or cold-rolled steel for deep drawing (SPCE), or a laminated film or plastic composing a pouch. The can 100a may include a disc-shaped bottom portion 110a and a cylindrical side portion 130a extending upward from the bottom portion 110a. The side portion 130a may have an open upper end, with the cap assembly 500a being coupled to the side portion 130a at the upper end. A beading portion 132a and a crimping portion 134a may be provided at the upper end of the side portion 130a. Although this embodiment is described based on a configuration in which the upper end of the can 100a is open, in other embodiments the lower end of the can 100a may be open. The electrode assembly 300a may be accommodated in the can 100a together with an electrolyte.

The beading portion 132a may be recessed inward at a position adjacent to the end of the side portion 130a. The crimping portion 134a may be spaced apart from the beading portion 132a and may be formed by bending the end of the side portion 130a inward. The cap assembly 500a may be disposed between the beading portion 132a and the crimping portion 134a. Thus, the cap assembly 500a may be fixed in place by the beading portion 132a and the crimping portion 134a so as to not be separated from the can 100a.

The electrode assembly 300a may include, or be referred to as, an electrode group, an electrode body, or a jelly roll. The electrode assembly 300a may include a first electrode plate 310a, a second electrode plate 320a, and a separator 330a. The electrode assembly 300a may be configured such that the first electrode plate 310a, the second electrode plate 320a, and the separator 330a are wound in a cylindrical shape with the separator 330a interposed between the first electrode plate 310a and the second electrode plate 320a. In some examples, the electrode assembly 300a may have a substantially open central region, which may be referred to as a core. A cylindrical center pin (optional) may be inserted into the core to provide structural support. The core may also serve as a pathway for releasing internal pressure when the internal pressure of the secondary battery 10a exceeds a certain level. In some examples, as the internal pressure rises, internal gas may travel upward through the core and may cause rupture of a notch 537a of a vent plate 530a. Thus, the gas may be discharged through the upper cap 510a, thereby reducing the internal pressure of the secondary battery 10a.

The first electrode plate 310a may be either a negative electrode plate or a positive electrode plate. The first electrode plate 310a may include a first substrate, which is a metal foil, a first active material layer provided on at least one surface of the first substrate, and a first uncoated portion where the first active material is not applied. The first uncoated portion may be referred to as a first substrate. The first electrode tab 410a may be electrically connected to the first uncoated portion. In some examples, the first electrode plate 310a may function as a negative electrode plate, and the first electrode tab 410a may function as a negative electrode tab. The first electrode tab 410a may include copper or nickel.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The second electrode plate 320a may be either a negative electrode plate or a positive electrode plate. The second electrode plate 320a may include a second substrate, which is a metal foil, a second active material layer provided on at least one surface of the second substrate, and a second uncoated portion where the second active material is not applied. The second uncoated portion may be referred to as a second substrate. The second electrode tab 430a may be electrically connected to the second uncoated portion. In some examples, the second electrode plate 320a may function as a positive electrode plate, and the second electrode tab 430a may function as a positive electrode tab. The second electrode tab 430a may include aluminum.

In some embodiments, as the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05) ; LiₐMn_{2-b}X_{b}O_{4-c}D_{c} (0.90≤a≤1.8, 0≤b≤0.5, 0≤c≤0.05) ; LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al) but is not limited thereto.

The separator 330a may be interposed between the first electrode plate 310a and the second electrode plate 320a to prevent short circuit between the first electrode plate 310a and the second electrode plate 320a.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer containing an organic material and a coating layer containing an inorganic material that are laminated on each other.

The electrolyte solution for a rechargeable lithium battery may include a non-aqueous organic solvent and a lithium salt.

The non-aqueous organic solvent may serve as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof, and may be used alone or in combination of two or more types.

Additionally, when using a carbonate-based solvent, a cyclic carbonate and a chain carbonate may be used in combination.

The first insulating plate 450a may have a plate shape and may be made of an insulating material. The first insulating plate 450a may prevent the first electrode plate 310a, which is a negative electrode plate, from being electrically connected to the bottom portion 110a of the can 100a. For example, the first insulating plate 450a may prevent direct contact between the first electrode plate 310a and the bottom portion 110a. The first insulating plate 450a may include a first hole 452a that is in communication with the core 380 A plurality of second holes 454a may also be formed through the first insulating plate 450a. The first hole 452a and the second holes 454a may allow gas to move toward the cap assembly 500a when a large amount of gas is generated due to an abnormal condition of the secondary battery. The second holes 454a may also serve as flow paths for gas and electrolyte. The first electrode tab 410a may extend through the first hole 452a and/or the second holes 454a and may be welded to the bottom portion 110a. In some embodiments, the first insulating plate 450a may be replaced with an insulating tape or an insulating sheet.

The second insulating plate 470a may prevent the second electrode plate 320a, which is a positive electrode plate, from being electrically connected to the cap assembly 500a. For example, the second insulating plate 470a may prevent direct contact between the second electrode plate 320a and the cap assembly 500a. one or more holes may be formed in the second insulating plate 470a. The second electrode tab 430a may extend through one of the hole and be electrically connected to the lower cap 550a. Some of the holes may serve as flow paths through which the electrolyte is injected into the electrode assembly 300a during the process of making the battery.

Although not shown in the drawings, other current collecting structures may be applied to the secondary battery of this embodiment. For example, the first uncoated portion and the second uncoated portion described above may be notched in a predetermined shape to function as a first substrate tab and a second substrate tab, respectively. The first substrate tab and the second substrate tab may be electrically connected to a first current collector and a second current collector, respectively. The first current collector may be electrically connected to the can. The second current collector may be electrically connected to the cap assembly while being electrically insulated from the can.

The cap assembly 500a may be coupled to the open end of the can 100a. The cap assembly 500a may include the upper cap 510a, the vent plate 530a, the lower cap 550a, the insulator 570a, and the insulating gasket 590a. The cap assembly 500a and the insulating gasket 590a may be inserted between the beading portion 132a and the crimping portion 134a of the can 100a. The upper cap 510a, the vent plate 530a, and the lower cap 550a may be formed of aluminum, an aluminum alloy, nickel-plated steel, a steel alloy, or equivalents thereto. But the present disclosure is not limited to these examples.

The upper cap 510a may be disposed at the outermost portion (the uppermost portion based on FIG. 5) of the cap assembly 500a and may be exposed to outside of the can 100a. The upper cap 510a may have a shape in which a portion protrudes convexly from a disc-shaped metal plate. The convex portion may correspond to the central region of the disc-shaped metal plate. The vent plate 530a may be disposed below the upper cap 510aand surround the edge of the upper cap 510a. Herein, as shown in FIG. 6, the edge region of the upper cap 510a will be referred to as a first region 512a, the protruding portion of the upper cap 510a will be referred to as a second region 514a, and an inclined region between the first region 512a and the second region 514a will be referred to as a third region. A plurality of discharge holes 516a may be formed in the third region. The discharge holes 516a may serve as pathways through which gas that passes through the core is discharged.

The vent plate 530a may have a substantially circular disc shape and may be formed such that the edge of the vent plate 530a surrounds the first region 512a of the upper cap 510a. More specifically, the edge of the vent plate 530a may surround the lower surface, the side surface, and a portion of the upper surface of the first region 512a. The vent plate 530a may have a larger diameter than the upper cap 510a. The vent plate 530a may include a first portion 531a, an inclined surface 532a, a second portion 533a, a third portion 534a, a fourth portion 535a, and a contact portion 536a. A notch 537a may be provided in the first portion 531a.

Herein, the portion of the vent plate 530a disposed below the second region 514a of the upper cap 510a is referred to as the first portion 531a. Based on FIG. 6, the inclined surface 532a extends upward from the outer diameter portion of the first portion 531a, and the second portion 533a extends outward from the inclined surface 532a. The second portion 533a may be in contact with the lower surface of the first region 512a of the upper cap 510a. As such, the inclined surface 532a obliquely connects the first portion 531a and the second portion 533a to each other such that there is a height difference between the first portion 531a and the second portion 533a. As shown in FIG. 6, the first portion 531a may be located at a lower position than the second portion 533a and may be closer to the lower cap 550a. That is, the second portion 533a may be located at a higher position than the first portion 531a, with inclined surface 532a inclined upward based on the orientation shown in FIG. 6. The third portion 534a may be bent substantially perpendicularly from the second portion 533a and may extend upward. The third portion 534a may contact the side surface of the first region 512a of the upper cap 510a. The fourth portion 535a may be bent substantially perpendicularly from the third portion 534a and may extend toward the center of the upper cap 510a. The fourth portion 535a may be in contact with a portion of the upper surface of the first region 512a of the upper cap 510a. The contact portion 536a may be a region of a predetermined area protruding from the center of the lower surface of the first portion 531a toward the lower cap 550a. The thickness of the first portion 531a including the contact portion 536a may be equal to or greater than the thicknesses of the other portions of the vent plate 530a. The contact portion 536a may be in direct contact with and welded to the lower cap 550a. Except for the contact portion 536a, no other portion of the vent plate 530a may be in contact with the lower cap 550a. For example, because the contact portion 536a protrudes, the first portion 531a, the inclined surface 532a, and the second portion 533a may be spaced apart from the lower cap 550a. In some embodiments, the insulator 570a may be inserted between the vent plate 530a and the lower cap 550a. The first portion 531a, the inclined surface 532a, the second portion 533a, the third portion 534a, the fourth portion 535a, and the contact portion 536a may be integrally formed.

At least one notch 537a may be provided in the first portion 531a of the vent plate 530a. The notch 537a may be spaced apart from the contact portion 536a. The notch 537a may be disposed adjacent to a gas hole 555 in the lower cap 550a(described below). In some examples, the notch 537a may be provided in the surface of the first portion 531a facing the upper cap 510a. In other examples, the notch 537a may be provided in the surface of the first portion 531a facing the lower cap 550a. If the outer diameter of the secondary battery 10a (the outer diameter of the can) is 21 mm, the diameter D1 of the notch 537a may be 8 mm or greater. In another example, if the outer diameter of the secondary battery 10a is 18 mm, the diameter D1 of the notch 537a may be 7 mm or greater. The notch 537a may be configured to rupture in response to increase in the internal pressure of the secondary battery 10a, thereby opening the vent plate 530a. Opening of the vent plate 530a refers to a state in which a portion inside the diameter of the notch 537a is separated due to the rupture of the notch 537a. The lower cap 550a may move toward the upper cap 510a when the notch 537a is ruptured. As a result, the notch 537a may provide a current interrupt function that is caused by pressure (e.g., internal pressure of the secondary battery).

The lower cap 550a may have a substantially circular disc shape and may have a smaller diameter than the notch 537a. As shown in FIG. 6, the lower cap 550a may be disposed below the vent plate 530a. The lower cap 550a may be the component of the cap assembly 500a that is located on the innermost side that is closest to the electrode assembly 300a. The lower cap 550a may support the upper cap 510a and the vent plate 530a to prevent deformation of the upper cap 510a due to external force. The lower cap 550a may include a first support portion 551a and a connecting portion 552a.

The first support portion 551a may be disposed below the second region 514a of the upper cap 510a and the first portion 531a of the vent plate 530a, with the first support portion 551a spaced apart from the first portion 531a of the vent plate 530a. The second electrode tab 430a may be electrically connected to the lower surface of the first support portion 551a. The connection may be made with ultrasonic welding or laser welding. The connecting portion 552a may extend inward from the first support portion 551a.

The connecting portion 552a may be extend from the inner diameter portion of the first support portion 551a toward the center of the lower cap 550a. The connecting portion 552a may have a smaller thickness (the thickness in the vertical direction as shown in FIG. 6) than the first support portion 551a. Because the thickness of the connecting portion 552a is less than that of the first support portion 551a, the lower surface of the connecting portion 552a may be connected to the lower surface of the first support portion 551a in a stepped manner. Thus, the lower surface of the connecting portion 552a may be closer to the contact portion 536a of the vent plate 530a than the lower surface of the first support portion 551a.

As described above, the outer diameter D2 of the lower cap 550a may be less than the diameter D1 of the notch 537a. The minimum outer diameter of the lower cap 550a required to reliably support the upper cap 510a and the vent plate 530a and to stabilize variation may be 6Ø. For example, if the outer diameter of the secondary battery 10a is 21 mm, the outer diameter of the lower cap 550a may range from 6 mm to less than 8 mm. In some examples where the outer diameter of the secondary battery 10a is 18 mm, the outer diameter of the lower cap 550a may range from 6 mm to less than 7 mm.

The insulator 570a may be formed of an insulating material to maintain separation and electrical insulation between the vent plate 530a and the lower cap 550a. The insulator 570a may be disposed between the first support portion 551a of the lower cap 550a and the first portion 531a of the vent plate 530a. In this configuration, the insulator 570a may be disposed inside the notch 537a. The insulator 570a may be formed in a circular ring shape having a predetermined width. In the example shown in FIG. 6, the lateral width of the insulator 570a is less than that of the first support portion 551a. In other embodiments, the insulator 570a may have various cross-sectional shapes, such as an L-shape or a U-shape. The insulator 570a may have an outer diameter that does not affect rupture of the notch 537a. For example, the outer diameter of the insulator 570a may be 4.5 mm or greater. As such, the outer diameter of the insulator 570a may also be less than the diameter D1 of the notch 537a. The insulator 570a may be formed of, for example, polyethylene (PE), polypropylene (PP), polystyrene (PS), ethylene-vinyl acetate copolymer (EVA), or equivalents thereto. But the present disclosure is not limited to these example. The insulator 570a may be bonded to the vent plate 530a and the lower cap 550a by ultrasonic welding, laser welding, thermal fusion, or the like.

Referring to FIG. 6, the insulating gasket 590a may be mounted to surround an outer side of the vent plate 530a in a state in which the upper cap 510a and the vent plate 530a are coupled to each other. The upper cap 510a and the vent plate 530a may be coupled to the can 100a via the insulating gasket 590a so as to be electrically insulated from the can 100a. The insulating gasket 590a may be made of a material identical or similar to the material of the insulator 570a.

As described above, because the outer diameters of the lower cap 550a and the insulator 570a are less than the diameter D1 of the notch 537a, the lower cap 550a and the insulator 570a do not affect the rupture and operation region of the notch 537a. Further, because the outer diameters of the lower cap 550a and the insulator 570a are less than the diameter D1 of the notch 537a, the lower cap 550a and the insulator 570a may be discharged in the direction indicated by the arrow in FIG. 6 together with the region of the upper cap 510a inside the notch 537a upon rupture of the notch 537a. These discharged regions are indicated by a dotted line B in FIG. 6. Upon rupture of the notch 537a due to increase in the internal pressure of the secondary battery 10a, the regions indicated by the dotted line B may be completely opened. In comparison with the embodiment shown in FIGS. 1 to 3 in which the lower cap 550 remains in place, the size of the opening may increase. As a result of the increased size of the opening, the electrode assembly 300a may be discharged through the opening while being pushed upward by the internal pressure. As the electrode assembly 300a is discharged in the direction indicated by the arrow in FIG. 6, the upper cap 510a may also be pushed and opened. If the internal pressure increases due to a fire or the like, the electrode assembly 300a may be discharged toward the upper cap 510a (in the upward direction based on FIG. 5), and flames or sparks may also be discharged upward. And the rapid discharge of the electrode assembly 300a and the release of gas may prevent rupture of the beading portion 132a or the side portion 130a of the can 100a. Thus, the spread of fire to adjacent secondary batteries may be prevented.

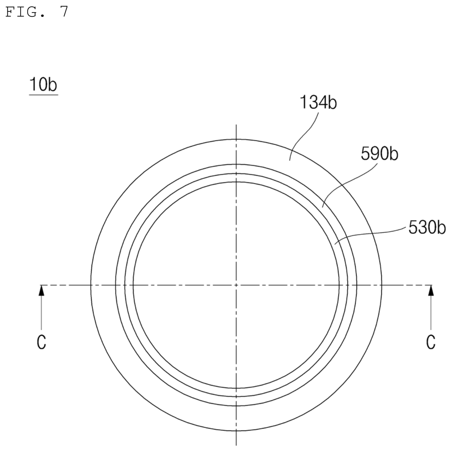

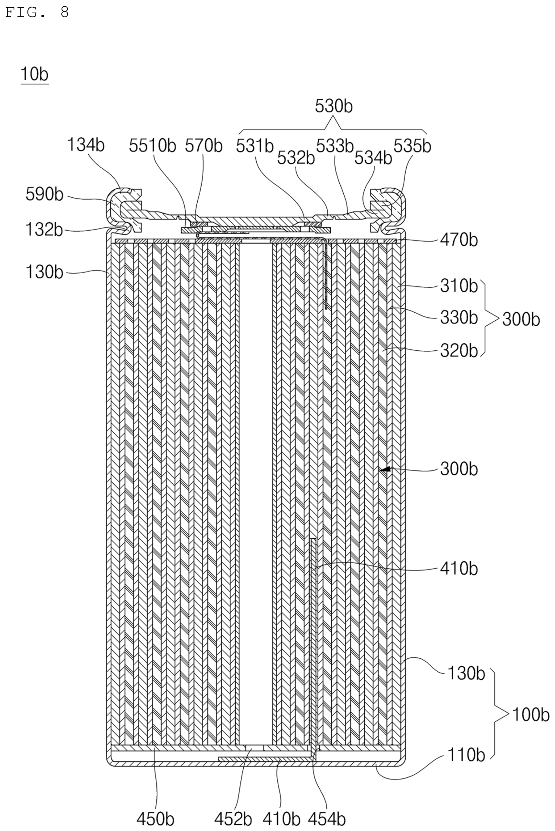

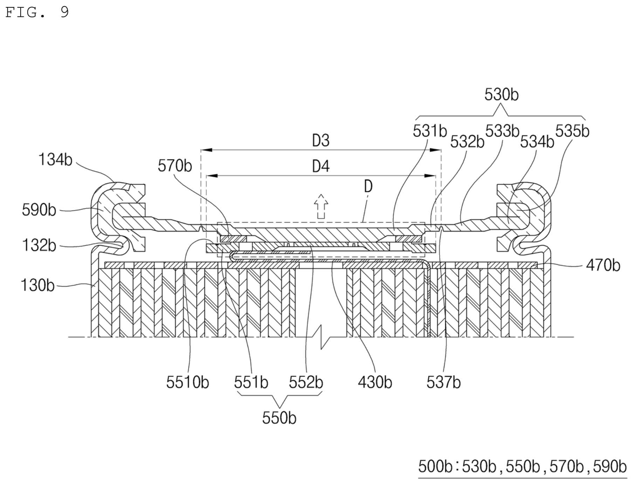

FIG. 7 is a plan view of a secondary battery according to another embodiment of the present disclosure. FIG. 8 is a cross-sectional view of the secondary battery taken along line C-C in FIG. 7. FIG. 9 is an enlarged cross-sectional view of the cap assembly shown in FIG. 8.

Referring to FIGS. 7 to 9, a secondary battery 10b according to another embodiment of the present disclosure may be a cylindrical battery. The secondary battery 10b may include a can 100b, an electrode assembly 300b, and a cap assembly 500b. The electrode assembly 300b may be electrically connected to the can 100b and the cap assembly 500b via a first electrode tab 410b and a second electrode tab 430b, respectively. A first insulating plate 450b may be disposed between the electrode assembly 300b and the can 100b. A second insulating plate 470b may be disposed between the electrode assembly 300b and the cap assembly 500b. Because the configuration of the secondary battery 10b other than the cap assembly 500b is to the same as in the above-described embodiments, a detailed description thereof will be omitted.

The cap assembly 500b may include a vent plate 530b, a lower cap 550b, an insulator 570b, and an insulating gasket 590b.

The vent plate 530b may have a substantially circular disc shape and may be made of the same material as the vent plate 530a described above. The vent plate 530b may be formed in a disc shape having a folded edge. The vent plate 530b may include a first portion 531b, a second portion 532b, a third portion 533b, a fourth portion 534b, and a fifth portion 535b. The first to fifth portions 531b to 535b may be integrally formed.

The first portion 531b may correspond to the central region of the disc-shaped structure. The upper surface of the first portion 531b may be flat, and the lower surface of the first portion 531b may protrude toward the electrode assembly 300b. The protruding lower surface may be in contact with and electrically connected to the lower cap 550b. The connection may be made by ultrasonic welding or laser welding. In other embodiments, the lower surface of the first portion 531b may have a flat shape rather than a protruding shape. That is, the protruding shape of the lower surface of the first portion 531b is optional.

The second portion 532b may extend outward from the outer diameter portion of the first portion 531b. The second portion 532b may have an area less than or equal to the area of the first portion 531b, and the second portion 532b may have a thickness less than or equal to the thickness of the first portion 531b. As shown in FIG. 9, the second portion 532b may be disposed at a higher position than the first portion 531b. Thus, the second portion 532b may extend from the first portion 531b in a stepped manner. However, the stepped structure of the second portion 532b is optional. In other embodiments, the first portion 531b and the second portion 532b may be formed in the same plane without a step therebetween.

A notch 537b may be provided in the surface of the second portion 532b facing the electrode assembly 300b. The notch 537b may have the same diameter as the notch 537a in the above-described embodiments. For example, if the outer diameter of the secondary battery 10b (the outer diameter of the can) is 21 mm, the diameter D3 of the notch 537b may be 8 mm or greater. In another example, if the outer diameter of the secondary battery 10b is 18 mm, the diameter D3 of the notch 537b may be 7 mm or greater.

The third portion 533b may extend outward from the outer diameter portion of the second portion 532b. The upper surface of the third portion 533b may be inclined upward, and the lower surface of the third portion 533b may be aligned with the lower surface of the second portion 532b. The third portion 533b may function to connect the second portion 532b to the fourth portion 534b. The third portion 533b may have a thickness equal to or greater than the thickness of the second portion 532b.

The fourth portion 534b may extend outward from the outer diameter portion of the third portion 533b and be surrounded by the insulating gasket 590b. The fifth portion 535b may be in contact with the upper surface or the lower surface of the fourth portion 534b. In some examples, the fifth portion 535b may be folded upward or downward. And the fourth portion 534b may have a larger thickness than the third portion 533b.

The fifth portion 535b may extend outward from the outer diameter portion of the fourth portion 534band may be folded such that the lower surface of the fifth portion 535b contacts the upper surface of the fourth portion 534b. The fifth portion 535b and the fourth portion 534b may be surrounded by the insulating gasket 590b. In some example, the fifth portion 535b may have the same thickness as the fourth portion 534b.

Herein, the vent plate 530b has been described as including the first to fifth portions 531b to 535b, but the shape of the vent plate 530b is not limited thereto. In one example, the vent plate may include a first portion connected to the lower cap 550b, a second portion including the notch and surrounded by the insulating gasket, and a third portion folded to be in close contact with the second portion.

The lower cap 550b may have a substantially circular disc shape and may have a smaller diameter than the notch 537b, with the lower cap 550b being disposed below the vent plate 530b as shown in FIG. 9. The lower cap 550b may be the component of the cap assembly 500b that is located on the innermost side that is closest to the electrode assembly 300b. The lower cap 550b may support the vent plate 530b to prevent deformation of the vent plate 530b due to external force. The lower cap 550b may include a first support portion 551b and a connecting portion 552b.

The first support portion 551b may be disposed in a boundary region between the first portion 531b and the second portion 532b of the vent plate 530b. The first support portion 551b may be spaced apart from the first portion 531b and the second portion 532b of the vent plate 530b. The edge of the first support portion 551b may be closer to the electrode assembly 300b than the other regions of the first support portion 551b. The edge of the first support portion 551b may be formed with a step relative to the other regions of the first support portion 551b. The upper surface 5510b of the first support portion 551b may be spaced from the lower surface of the insulator 570b. A hole for gas release may be formed through the first support portion 551b. The second electrode tab 430b may be electrically connected to the lower surface of the first support portion 551b. The connection may be made by ultrasonic welding or laser welding. The connecting portion 552b may extend inward from the first support portion 551b.

The connecting portion 552b may extend from the inner diameter portion of the first support portion 551b toward the center of the lower cap 550b. The connecting portion 552b may have a smaller thickness (the vertical thickness shown in FIG. 9) than the first support portion 551b. Because the thickness of the connecting portion 552b is less than that of the first support portion 551b, the lower surface of the connecting portion 552b may be connected to the lower surface of the first support portion 551b in a stepped manner. The lower surface of the connecting portion 552b may be closer to the contact portion 536b of the vent plate 530b than the lower surface of the first support portion 551b is to the vent plate 530b.

As described above, the outer diameter D4 of the lower cap 550b may be less than the diameter D3 of the notch 537b. The minimum outer diameter of the lower cap 550b required to reliably support the vent plate 530b and to stabilize variation may be, for example, 6 mm. Further, if the outer diameter of the above-described exemplary secondary battery 10b is 21 mm, the outer diameter of the lower cap 550b may range, for example, from 6 mm to less than 8 mm. If the outer diameter of the secondary battery 10b is 18 mm, the outer diameter of the lower cap 550b may range, for example, from 6 mm to less than 7 mm.

The insulator 570b may be formed of the same material as the insulator 570a of the above-described embodiments and may perform the same function as the insulator 570a. The insulator 570b may be disposed between the first support portion 551b of the lower cap 550b and the first portion 531b of the vent plate 530b. In this configuration, the insulator 570b may be disposed inside the notch 537b. The insulator 570b may be formed in a circular ring shape having a predetermined width. For example, as shown in FIG. 9 the lateral width of the insulator 570b may be less than that of the first support portion 551b. In other embodiments, the insulator 570b may have various cross-sectional shapes, such as an '' shape (L-shape) or a '' shape (U-shape) . The insulator 570b may have an outer diameter that does not affect rupture of the notch 537b. For example, the outer diameter of the insulator 570b may be 4.5 mm or greater. The outer diameter of the insulator 570b may also be less than the diameter D3 of the notch 537b.

The insulating gasket 590b may be mounted to surround an outer side of the vent plate 530b. And the vent plate 530b may be coupled to the can 100b via the insulating gasket 590b so as to be electrically insulated from the can 100b. The insulating gasket 590b may be made of a material identical or similar to the material of the insulator 570b.

In the secondary battery 10b according to the embodiment shown in FIGS. 7 to 9, because the outer diameters of the lower cap 550b and the insulator 570b are less than the diameter D3 of the notch 537b, the lower cap 550b and the insulator 570b may be discharged in the direction indicated by the arrow in FIG. 9 together with the region inside the notch 537b upon rupture of the notch 537b. Upon rupture of the notch 537b due to increase in the internal pressure of the secondary battery 10b, the regions indicated by the dotted line D may be completely opened. Thus, the electrode assembly 300b may also be discharged in the direction indicated by the arrow in FIG. 9. The discharge of the electrode assembly 300b may prevent rupture of the beading portion 132b or the side portion 130b of the can 100b. Thus, the spread of fire to adjacent secondary batteries may be prevented.

The secondary batteries according to the above-described embodiments may be used to manufacture a battery pack. .

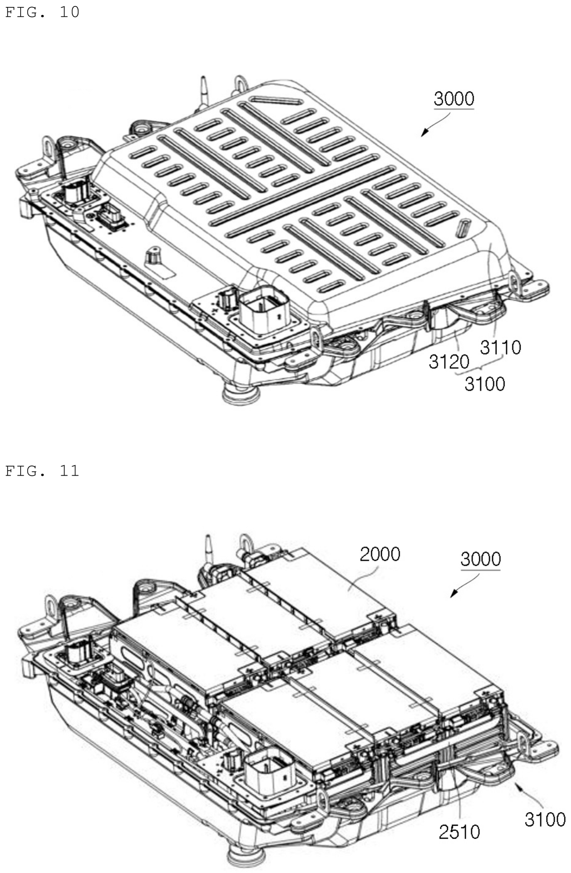

FIGS. 10 and 11 are perspective views showing a battery pack 30000 including an exemplary secondary battery.

Referring to Figures 10 and 11, the battery pack 3000 may include a plurality of battery modules 2000 and a housing 3100 for accommodating the plurality of battery modules 2000. For example, the housing 3100 may include first and second housings 3110 and 3120 coupled in opposite directions through the plurality of battery modules 2000. The plurality of battery modules 2000 may be electrically connected to each other by using a bus bar 2510, and the plurality of battery modules 2000 may be electrically connected to each other in a series/parallel or series-parallel mixed method, thereby obtaining desired (e.g., required) electrical output. In the drawings, for convenience, components such as busbars for the electrical connection of battery cells, cooling units, and external terminals are omitted. In some examples, the battery pack (300) may be installed in a vehicle. The vehicle can be, for example, an electric vehicle, a hybrid vehicle, or a plug-in hybrid vehicle. The vehicle may include a four-wheel vehicle or a two-wheel vehicle.

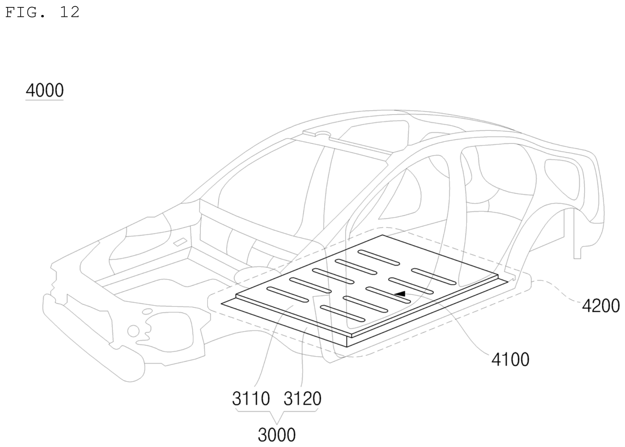

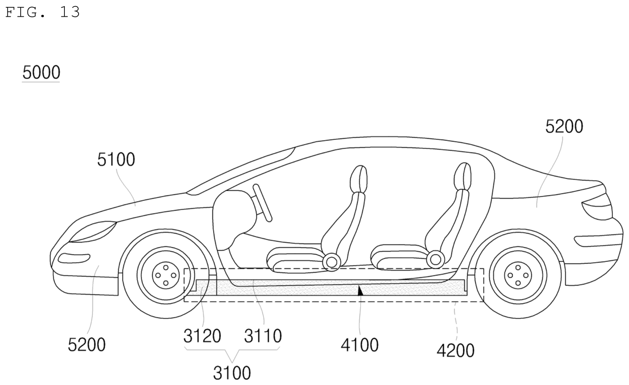

FIGS. 12 and 13 are perspective and side views of automobiles 4000 and 5000 including an exemplary battery pack 3000 according to the present disclosure. In FIG. 12, a battery pack 3000 may include a battery pack cover 3110, which is a part of a vehicle underbody 4100 and may correspond to the first housing, and a pack frame 3120, which is disposed under the vehicle underbody 4100 and may corresponding to the second housing. The battery pack cover 3110 and the pack frame 3120 may be integrally formed with a vehicle floor 4200. The vehicle underbody 4100 separates the inside and outside of a vehicle, and the pack frame 3120 may be disposed outside the vehicle.

In FIG. 13, a vehicle 5000 may be formed by combining additional parts, such as a hood 5100 in front of the vehicle 5000 and fenders 5200 respectively located in the front and rear of the vehicle 5000 to a vehicle body pars 4000. The vehicle 500 may include the battery pack 3000 including the battery pack cover 3110 and the pack frame 3120, and the battery pack 3000 may be coupled to the vehicle body part 4000.

According to the embodiments of the present disclosure, because the diameter of a lower cap is less than that of a notch of a vent plate, the lower cap may be ruptured in response to rupture of the vent plate due to increase in the internal pressure of the secondary battery. Thus, when the vent plate and the lower cap are discharged from a secondary battery, the electrode assembly may also be discharged from the secondary battery. Further, due to the above structures and configurations, it is possible to secure a discharge path to an upper terminal part rather than other parts of the secondary battery and to prevent the spread of fire to adjacent secondary batteries.

However, aspects and features of the present disclosure are not limited to those described above, and other aspects and features not mentioned will be clearly understood by a person skilled in the art from the detailed description, described below.

While the disclosure has been hereinabove described in connection with only a limited number of embodiments and drawings, the disclosure is not limited to the disclosed embodiments. Various changes and modifications may be made by those skilled in the art within the spirit and scope of the disclosure.
In the following, further preferred embodiments are described to facilitate understanding:
Embodiment 1. A secondary battery comprising:
   a cylindrical can having an open end and a closed end;
   an electrode assembly accommodated in the can; and
   a cap assembly comprising:
      an upper cap closing the open end of the can, a
      lower cap spaced apart from the upper cap and facing the electrode assembly,
      a vent plate disposed between the upper cap and the lower cap, with a notch being formed in the vent plate and
      an insulating gasket inserted between the vent plate and the can,
      wherein an outer diameter of the lower cap is less than a diameter of the notch.
Embodiment 2. The secondary battery of embodiment 1, further comprising an insulator between the vent plate and the lower cap.
Embodiment 3. The secondary battery of embodiment 1 or 2, wherein an outer diameter of the insulator is less than the diameter of the notch.
Embodiment 4. The secondary battery of any one of the preceding embodiments, wherein the vent plate surrounds an edge of the upper cap.
Embodiment 5. The secondary battery of any one of the preceding embodiments, wherein the upper cap is formed in a circular disc shape and comprises:
   a first region surrounded by the vent plate;
   a second region protruding in a direction away from the electrode assembly; and
   a third region connecting the first region to the second region, with a plurality of discharge holes being formed in the third region.
Embodiment 6. The secondary battery of embodiment 5, wherein the vent plate is formed in a circular disc shape and comprises:
   a first portion disposed below the second region of the upper cap;
   an inclined surface extending upward from the first region;
   a second portion extending outward from the inclined surface and in contact with a lower surface of the first region of the upper cap;
   a third portion extending from the second portion and in contact with a side surface of the first region of the upper cap; and
   a fourth portion extending from the third portion and in contact with an upper surface of the first region of the upper cap.
Embodiment 7. The secondary battery of embodiment 6, wherein the notch is formed in the first portion of the vent plate.
Embodiment 8. The secondary battery of embodiment 6 or 7, wherein the vent plate further comprises a contact portion protruding from a lower surface of the first portion toward the lower cap.
Embodiment 9. The secondary battery of embodiment 8, wherein the notch is spaced from the contact portion.
Embodiment 10. The secondary battery of any one of the preceding embodiments 8 or 9, wherein the lower cap is formed in a circular disc shape and comprises:
   a support portion disposed below the second region of the upper cap and the first portion of the vent plate; and
   a connecting portion extending inward from the support portion and electrically connected to the contact portion of the vent plate.
Embodiment 11. The secondary battery of embodiment 10, further comprising:
   a first electrode tab electrically connected to a lower surface of the support portion and a first electrode plate of the electrode assembly; and
   a second electrode tab electrically connected to a second electrode plate of the electrode assembly and the closed end of the can.
Embodiment 12. A secondary battery comprising:
   a cylindrical can having an open end and a closed end;
   an electrode assembly accommodated in the can; and
   a cap assembly comprising:
      a vent plate disposed at the open end of the can, with a notch formed in the vent plate,
      a lower cap spaced apart from the vent plate and facing the electrode assembly, and
      an insulating gasket between the vent plate and the can,
      wherein an outer diameter of the lower cap is less than a diameter of the notch.
Embodiment 13. The secondary battery of embodiment 12, further comprising an insulator between the vent plate and the lower cap.
Embodiment 14. The secondary battery of embodiment 13, wherein an outer diameter of the insulator is less than the diameter of the notch.
Embodiment 15. The secondary battery of any one of the preceding embodiments 12 to 14, wherein the vent plate is a circular disc shape and has a folded edge.
Embodiment 16. The secondary battery of embodiment 15, wherein the insulating gasket surrounds the folded edge of the vent plate.
Embodiment 17. The secondary battery of any one of the preceding embodiments 12 to 16, wherein the vent plate comprises a contact portion protruding from a lower surface and facing the lower cap.
Embodiment 18. The secondary battery of embodiment 17, wherein the notch is spaced from the contact portion.
Embodiment 19. The secondary battery of any one of the preceding embodiments 17 or 18, wherein the lower cap is a circular disc shape and comprises:
   a support portion disposed below the vent plate; and
   a connecting portion extending inward from the support portion and electrically connected to the contact portion of the vent plate.
Embodiment 20. The secondary battery of embodiment 19, further comprising:
   a first electrode tab electrically connected to a lower surface of the support portion and a first electrode plate of the electrode assembly; and
   a second electrode tab electrically connected to a second electrode plate of the electrode assembly and the closed end of the can.

## Claims

1. A secondary battery (10, 10a, 10b) comprising:
a cylindrical can (100, 100a, 100b) having an open end and a closed end;
an electrode assembly (300, 300a, 300b) accommodated in the can (100, 100a, 100b); and
a cap assembly (500, 500a, 500b) comprising:
an upper cap (510a) closing the open end of the can (100, 100a, 100b), a
lower cap spaced apart from the upper cap (510a) and facing the electrode assembly (300, 300a, 300b),
a vent plate (530, 530a, 530b) disposed between the upper cap (510a) and the lower cap, with a notch (537, 537a, 537b) being formed in the vent plate (530, 530a, 530b) and
an insulating gasket (590, 590a, 590b) inserted between the vent plate (530, 530a, 530b) and the can (100, 100a, 100b),
wherein an outer diameter of the lower cap is less than a diameter of the notch (537, 537a, 537b).

2. The secondary battery (10, 10a, 10b) as claimed in claim 1, further comprising an insulator (570, 570a, 570b) between the vent plate (530, 530a, 530b) and the lower cap; wherein preferably an outer diameter of the insulator (570, 570a, 570b) is less than the diameter of the notch (537, 537a, 537b) and/or the vent plate (530, 530a, 530b) surrounds an edge of the upper cap (510a).

3. The secondary battery (10, 10a, 10b) of any one of the preceding claims, wherein the upper cap (510a) is formed in a circular disc shape and comprises:
a first region (512, 512a) surrounded by the vent plate (530, 530a, 530b);
a second region protruding in a direction away from the electrode assembly (300, 300a, 300b); and
a third region connecting the first region (512, 512a) to the second region (514, 514a), with a plurality of discharge holes (516, 516a) being formed in the third region.

4. The secondary battery (10, 10a, 10b) as claimed in claim 3, wherein the vent plate (530, 530a, 530b) is formed in a circular disc shape and comprises:
a first portion (531, 531a, 531b) disposed below the second region (514, 514a) of the upper cap (510a);
an inclined surface (532, 532a) extending upward from the first region (512, 512a);
a second portion (532b, 533, 533a) extending outward from the inclined surface (532, 532a) and in contact with a lower surface of the first region (512, 512a) of the upper cap (510a);
a third portion (533b, 534, 534a) extending from the second portion (532b, 533, 533a) and in contact with a side surface of the first region (512, 512a) of the upper cap (510a); and
a fourth portion (534b, 535, 535a) extending from the third portion (533b, 534, 534a) and in contact with an upper surface (5510b) of the first region (512, 512a) of the upper cap (510a) and/or the notch (537, 537a, 537b) is formed in the first portion (531, 531a, 531b) of the vent plate (530, 530a, 530b) and/or the vent plate (530, 530a, 530b) further comprises a contact portion (536, 536a, 536b) protruding from a lower surface of the first portion (531, 531a, 531b) toward the lower cap and/or the notch (537, 537a, 537b) is spaced from the contact portion (536, 536a, 536b).

5. The secondary battery (10, 10a, 10b) as claimed in claim 4, wherein the lower cap is formed in a circular disc shape and comprises:
a support portion (551, 551a, 551b, 553) disposed below the second region (514, 514a) of the upper cap (510a) and the first portion (531, 531a, 531b) of the vent plate (530, 530a, 530b); and
a connecting portion (552a, 552b, 554) extending inward from the support portion (551, 551a, 551b, 553) and electrically connected to the contact portion (536, 536a, 536b) of the vent plate (530, 530a, 530b).

6. The secondary battery (10, 10a, 10b) as claimed in claim 5, further comprising:
a first electrode tab (410, 410a, 410b) electrically connected to a lower surface of the support portion (551, 551a, 551b, 553) and a first electrode plate (310, 310a) of the electrode assembly (300, 300a, 300b); and
a second electrode tab (430, 430a, 430b) electrically connected to a second electrode plate (320, 320a) of the electrode assembly (300, 300a, 300b) and the closed end of the can (100, 100a, 100b).

7. A secondary battery (10, 10a, 10b) comprising:
a cylindrical can (100, 100a, 100b) having an open end and a closed end;
an electrode assembly (300, 300a, 300b) accommodated in the can (100, 100a, 100b); and
a cap assembly (500, 500a, 500b) comprising:
a vent plate (530, 530a, 530b) disposed at the open end of the can (100, 100a, 100b), with a notch (537, 537a, 537b) formed in the vent plate (530, 530a, 530b),
a lower cap spaced apart from the vent plate (530, 530a, 530b) and facing the electrode assembly (300, 300a, 300b), and
an insulating gasket (590, 590a, 590b) between the vent plate (530, 530a, 530b) and the can (100, 100a, 100b),
wherein an outer diameter of the lower cap is less than a diameter of the notch (537, 537a, 537b).

8. The secondary battery (10, 10a, 10b) as claimed in claim 7, further comprising an insulator (570, 570a, 570b) between the vent plate (530, 530a, 530b) and the lower cap.

9. The secondary battery (10, 10a, 10b) as claimed in claim 8, wherein an outer diameter of the insulator (570, 570a, 570b) is less than the diameter of the notch (537, 537a, 537b).

10. The secondary battery (10, 10a, 10b) of any one of the preceding claims 7 to 9, wherein the vent plate (530, 530a, 530b) is a circular disc shape and has a folded edge.

11. The secondary battery (10, 10a, 10b) as claimed in claim 10, wherein the insulating gasket (590, 590a, 590b) surrounds the folded edge of the vent plate (530, 530a, 530b).

12. The secondary battery (10, 10a, 10b) of any one of the preceding claims 7 to 11, wherein the vent plate (530, 530a, 530b) comprises a contact portion (536, 536a, 536b) protruding from a lower surface and facing the lower cap.

13. The secondary battery (10, 10a, 10b) as claimed in claim 12, wherein the notch (537, 537a, 537b) is spaced from the contact portion (536, 536a, 536b).

14. The secondary battery (10, 10a, 10b) as claimed in claims 12 or 13, wherein the lower cap is a circular disc shape and comprises:
a support portion (551, 551a, 551b, 553) disposed below the vent plate (530, 530a, 530b); and
a connecting portion (552a, 552b, 554) extending inward from the support portion (551, 551a, 551b, 553) and electrically connected to the contact portion (536, 536a, 536b) of the vent plate (530, 530a, 530b).

15. The secondary battery (10, 10a, 10b) as claimed in claim 14, further comprising:
a first electrode tab (410, 410a, 410b) electrically connected to a lower surface of the support portion (551, 551a, 551b, 553) and a first electrode plate (310, 310a) of the electrode assembly (300, 300a, 300b); and
a second electrode tab (430, 430a, 430b) electrically connected to a second electrode plate (320, 320a) of the electrode assembly (300, 300a, 300b) and the closed end of the can (100, 100a, 100b).

## Amended claims

### Amended claims in accordance with Rule 137(2) EPC.

1. The secondary battery (10, 10a, 10b) as claimed in claim 7, wherein the cap assembly (500, 500a, 500b) further comprises:
an upper cap (510a) closing the open end of the can (100, 100a, 100b).

2. The secondary battery (10, 10a, 10b) as claimed in claim 1, further comprising an insulator (570, 570a, 570b) between the vent plate (530, 530a, 530b) and the lower cap; wherein preferably an outer diameter of the insulator (570, 570a, 570b) is less than the diameter of the notch (537, 537a, 537b) and/or the vent plate (530, 530a, 530b) surrounds an edge of the upper cap (510a).

3. The secondary battery (10, 10a, 10b) of any one of the preceding claims, wherein the upper cap (510a) is formed in a circular disc shape and comprises:
a first region (512, 512a) surrounded by the vent plate (530, 530a, 530b);
a second region protruding in a direction away from the electrode assembly (300, 300a, 300b); and
a third region connecting the first region (512, 512a) to the second region (514, 514a), with a plurality of discharge holes (516, 516a) being formed in the third region.

4. The secondary battery (10, 10a, 10b) as claimed in claim 3, wherein the vent plate (530, 530a, 530b) is formed in a circular disc shape and comprises:
a first portion (531, 531a, 531b) disposed below the second region (514, 514a) of the upper cap (510a);
an inclined surface (532, 532a) extending upward from the first portion (531, 531a, 531b);
a second portion (532b, 533, 533a) extending outward from the inclined surface (532, 532a) and in contact with a lower surface of the first region (512, 512a) of the upper cap (510a);
a third portion (533b, 534, 534a) extending from the second portion (532b, 533, 533a) and in contact with a side surface of the first region (512, 512a) of the upper cap (510a); and
a fourth portion (534b, 535, 535a) extending from the third portion (533b, 534, 534a) and in contact with an upper surface (5510b) of the first region (512, 512a) of the upper cap (510a), wherein the notch (537, 537a, 537b) is formed in the first portion (531, 531a, 531b) of the vent plate (530, 530a, 530b), wherein the vent plate (530, 530a, 530b) further comprises a contact portion (536, 536a, 536b) protruding from a lower surface of the first portion (531, 531a, 531b) toward the lower cap and/or the notch (537, 537a, 537b) is spaced from the contact portion (536, 536a, 536b).

5. The secondary battery (10, 10a, 10b) as claimed in claim 4, wherein the lower cap is formed in a circular disc shape and comprises:
a support portion (551, 551a, 551b, 553) disposed below the second region (514, 514a) of the upper cap (510a) and the first portion (531, 531a, 531b) of the vent plate (530, 530a, 530b); and
a connecting portion (552a, 552b, 554) extending inward from the support portion (551, 551a, 551b, 553) and electrically connected to the contact portion (536, 536a, 536b) of the vent plate (530, 530a, 530b).

6. The secondary battery (10, 10a, 10b) as claimed in claim 5, further comprising:
a first electrode tab (410, 410a, 410b) electrically connected to a lower surface of the support portion (551, 551a, 551b, 553) and a first electrode plate (310, 310a) of the electrode assembly (300, 300a, 300b); and
a second electrode tab (430, 430a, 430b) electrically connected to a second electrode plate (320, 320a) of the electrode assembly (300, 300a, 300b) and the closed end of the can (100, 100a, 100b).

7. A secondary battery (10, 10a, 10b) comprising:
a cylindrical can (100, 100a, 100b) having an open end and a closed end;
an electrode assembly (300, 300a, 300b) accommodated in the can (100, 100a, 100b); and
a cap assembly (500, 500a, 500b) comprising:
a vent plate (530, 530a, 530b) disposed at the open end of the can (100, 100a, 100b), with a notch (537, 537a, 537b) formed in the vent plate (530, 530a, 530b),
a lower cap spaced apart from the vent plate (530, 530a, 530b) and facing the electrode assembly (300, 300a, 300b), and
an insulating gasket (590, 590a, 590b) between the vent plate (530, 530a, 530b) and the can (100, 100a, 100b),
wherein an outer diameter of the lower cap is less than a diameter of the notch (537, 537a, 537b), wherein the secondary battery further comprises an insulator (570, 570a, 570b) between the vent plate (530, 530a, 530b) and the lower cap, wherein an outer diameter of the insulator (570, 570a, 570b) is less than the diameter of the notch (537, 537a, 537b).

8. The secondary battery (10, 10a, 10b) of claim 7, wherein the vent plate (530, 530a, 530b) is a circular disc shape and has a folded edge.

9. The secondary battery (10, 10a, 10b) as claimed in claim 8, wherein the insulating gasket (590, 590a, 590b) surrounds the folded edge of the vent plate (530, 530a, 530b).

10. The secondary battery (10, 10a, 10b) of any one of the preceding claims 7 to 9, wherein the vent plate (530, 530a, 530b) comprises a contact portion (536, 536a, 536b) protruding from a lower surface and facing the lower cap.

11. The secondary battery (10, 10a, 10b) as claimed in claim 10, wherein the notch (537, 537a, 537b) is spaced from the contact portion (536, 536a, 536b).

12. The secondary battery (10, 10a, 10b) as claimed in claims 10 or 11, wherein the lower cap is a circular disc shape and comprises:
a support portion (551, 551a, 551b, 553) disposed below the vent plate (530, 530a, 530b); and
a connecting portion (552a, 552b, 554) extending inward from the support portion (551, 551a, 551b, 553) and electrically connected to the contact portion (536, 536a, 536b) of the vent plate (530, 530a, 530b).

13. The secondary battery (10, 10a, 10b) as claimed in claim 12, further comprising:
a first electrode tab (410, 410a, 410b) electrically connected to a lower surface of the support portion (551, 551a, 551b, 553) and a first electrode plate (310, 310a) of the electrode assembly (300, 300a, 300b); and
a second electrode tab (430, 430a, 430b) electrically connected to a second electrode plate (320, 320a) of the electrode assembly (300, 300a, 300b) and the closed end of the can (100, 100a, 100b).
